# EUROPEAN PATENT APPLICATION

(11) **EP 0 568 945 A1**
(43) Date of publication of application: **10.11.1993**
(21) Application number: 93107104.7
(22) Date of filing: 01.05.1993
(51) Int. Cl.: C08L 67/00, C08L 71/12, C08L 81/04, C08L 101/00, C08K 5/54, C09K 19/38

(54) **Thermotropic polyester blends compatibilized with organofunctional silane coupling agents**

(30) Priority: 08.05.1992 US 880272
(71) Applicant: HOECHST CELANESE CORPORATION, Somerville, N.J. 08876 (US)
(72) Inventor: Haider, Ishag M., Bernardsville, New Jersey (US); Kenig, Samual, Haifa (IL); Sullivan, Vincent J., Madison, New Jersey 07940 (US)
(74) Representative: von Kreisler, Alek, Dipl.-Chem.

(57) **Abstract**

A novel polymer blend containing a wholly aromatic thermotropic LCP polyester, a non-thermotropic polymer, at least one organofunctional silane compound, and a process for making this blend. Preferred organofunctional silanes include epoxysilanes, aminosilanes, methacryloxysilanes, vinylsilanes and mercaptosilanes.

## Description

### Background Of The Invention

The present invention relates to liquid crystal polymer ("LCP") blends, especially to blends comprising a thermotropic LCP, a non-thermotropic polymer, and an organofunctional silane compound, and a process for making such polymer blends.

Many polymers exhibiting liquid crystalline properties are known in the art. However, these polymers generally tend to be incompatible with other polymers. When a compatible blend of an LCP and another polymer is desired, it is often necessary to add a small amount of another ingredient or compatibilizer to promote more thorough blending between the two polymers. The additional ingredient may work by promoting bond formation between diverse polymer molecules, changing the interfacial surface tension of the two phases, or both. However, a compatibilizer that is effective in one system may not be effective in others; a great deal depends upon the specific functionalities of the molecules. To date, an effective compatibilizer has not been reported for LCP blends.

An important driving force in seeking new polymer blends is cost-effectiveness. It is often desirable, for example, to discover new blends that have one or more desirable characteristics found in an expensive polymer, but cost less. This is usually accomplished by finding a suitable blend comprising the expensive polymer and a less expensive one.

Another reason for blending polymers is to create compositions that are better able to meet special needs than the polymers known in the art. Accordingly, it is sometimes desired to combine an LCP with another polymer having special characteristics in the hope of creating a blend exhibiting the desirable characteristics of both polymers.

For example, polyphenylenesulfide ("PPS") has very good thermal stability and chemical resistance, potentially important characteristics for an LCP blend. Polyphenyleneoxide ("PPO") combines reasonable impact and chemical resistance with relatively low cost. However, LCP's are generally incompatible with PPO or PPS. LCP/PPO and LCP/PPS blends tend to have large regions or domains of the individual polymers rather than fine, well-dispersed domains; the large domains tend to produce poor properties, e.g. their films and injected molded parts are brittle and have poor tensile properties. Similar problems may arise when an LCP is blended with other polymers.

The selection of a compatibilizer will generally affect the properties of the polymer blend. The effect on polymer blend properties of various ingredients is somewhat unpredictable, and much experimental work has been done to find desirable compatibilizers for various polymer blends.

Silanes are known to be useful as coupling agents to bond glass and other materials. Organosilanes have the general formula RₙSiX₍₄₋ₙ₎ where R is an organic functional group and X is a hydrolyzable group, such as alkoxy, amine, or the like; in many commonly used organosilanes n=1. A wide variety of silanes exists, including organosilanes such as aminosilanes, mercaptosilanes, epoxysilanes, vinylsilanes, methacryloxysilanes, and so forth.

Various silane coupling agents and their uses are described in an article by Barry Arkles entitled Silane Coupling Agent Chemistry, in "Silicon Compounds Register and Review", a 1987 catalog published by Petrarch Systems, Inc. These uses include bonding an inorganic substrate to a polymer, and bonding one organic compound to another organic compound. In some applications more than one silane compound is used, e.g. an aminosilane and an epoxysilane.

U.S. Patent Number 4,861,515 describes a polyester composition comprising a thermotropic polyester and an inorganic filler that has been surface-treated with an epoxysilane compound.

U.S. Patent Number 4,775,712 describes a polyester composition comprising a thermoplastic polyester, a polyorganosiloxane-based graft copolymer, a polyester elastomer and a filler.

U.S. Patent Number 4,740,538 describes a filled engineering plastic in which the filler was treated with separate coatings of an amino functional silane coupling agent and an impact modifier.

U.S. Patent Number 4,585,823 describes ovenware produced from an aromatic polyester, calcium metasilicate, and titanium oxide.

U.S. Patent Number 4,393,156 describes a hydrolytically stable aromatic polyester composition including a stabilizing compound selected from epoxy silanes and epoxy siloxanes.

European Patent Application 89307552.3, having publication number 0 353 933, describes a sealing resin composition comprising a polyester and an inorganic powder surface treated with an epoxy- or mercapto-silane coupling agent.

European Patent Application 89121679.8, having publication number 0 370 512, describes a chopped strand mat having fibers doped with a surface treating composition comprising an epoxysilane coupling agent and an epoxy resin.

European Patent Application 89119206.4, having publication number 0 367 013, describes a thermoplastic molding material made of a number of components, including an aromatic polyester and halosilane compounds.

### Summary Of The Invention

The present invention is a polymer blend comprising a wholly aromatic thermotropic LCP polyester, a non-thermotropic polymer, and an organofunctional silane, a process for making such polymer blends, and articles made therefrom.

These relatively low cost, highly processible LCP blends may be useful in electronic components (e.g., in cameras, video and/or audio devices, and the like), particularly where miniaturization is important, because these blends can be formed into very small, finely detailed components.

It is an object of the present invention to provide a novel LCP blend that is relatively easy to melt process.

It is another object of the present invention to provide an LCP blend exhibiting good phase morphology and interfacial adhesion, and good thermal and mechanical properties.

It is a further object of this invention to provide a wholly aromatic polyester blend containing one or more organofunctional silane compounds.

It is also an object of this invention to provide a process for compatibilizing an LCP with another polymer.

It is an additional object of the present invention to provide a process for producing LCP-containing molded articles that have little or no blistering surface defects.

Other objects and purposes of the present invention will be apparent to those skilled in the art upon consideration of the following disclosure.

### Detailed Description Of The Preferred Embodiments

In a preferred embodiment of the present invention, VECTRA® A polyester (available from Hoechst Celanese Corporation), a wholly aromatic thermotropic LCP, is blended with: a non-thermotropic polymer, e.g. PPO, PPS, PET (polyethylene-terephthalate), PEN (polyethylene-2,6-naphthalene dicarboxylate), PCT (poly[cyclohexanedimethanol terephthalate]) and the like; an epoxysilane; and, another organofunctional silane such as a mercaptosilane, an aminosilane, a vinylsilane, a methacryloxysilane, or the like.

VECTRA® A polyester comprises repeating units derived from p-hydroxybenzoic acid (73 mole %) of the formula 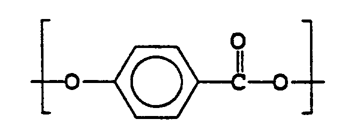
and repeating units derived from 2,6-hydroxynaphthoic acid (27 mole %) of the formula 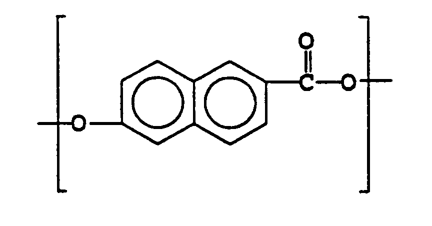
Since both of the monomer units contain aromatic rings, VECTRA A is a wholly aromatic polyester.

The polymer blend of this embodiment of the present invention includes about 0.1-5% by weight of epoxysilane, about 5-95% VECTRA A, and about 95-5% of a non-thermotropic polymer. Preferably, the non-thermotropic polymer is PPO, PPS, PET PCT, or PEN. A second organofunctional silane may included at a level of about 0.1-5%. Preferably, each organofunctional silane comprises about 0.5-5% of the total weight of the blend. Most preferably, each comprises about 1% of the total weight of the blend.

More generally in the practice of this invention, the blend contains about 5-95% wholly aromatic thermotropic LCP polyester, about 95-5% non-thermotropic polymer preferably comprising PPO, PPS, PET PCT, or PEN, and approximately about 0.1-5%, preferably about 0.5-5%, and most preferably about 1%, of an organofunctional silane compound preferably comprising an epoxysilane, a vinylsilane, an aminosilane, a mercaptosilane, or a methacryloxysilane. It is often desirable to include a second organofunctional silane compound in the same concentration range as the first to improve the compatibilization of the two polymers.

The epoxysilanes of the present invention may contain virtually any epoxy group, and may be aromatic or non-aromatic. Examples of suitable epoxysilanes include 2-(3,4-epoxycyclohexyl)-ethyltrimethoxysilane, 3-glycidoxypropyltrimethoxysilane, and the like. More than one epoxysilane compound may be included in the polymer blend.

Examples of aminosilanes that may be used in the practice of this invention include 3-aminopropyltrimethoxysilane, 3-aminopropyltriethoxysilane, N-(2-aminoethyl)-3-aminopropyltrimethoxysilane, and the like. Examples of suitable mercaptosilanes include 3-mercapto-propyltrimethoxysilane, 2-mercapto-ethyltriethoxysilane, and the like. Examples of suitable vinylsilanes include vinyltriethoxysilane, vinyl-tris(β-methoxyethoxy)silane, vinyltriacetoxysilane, and the like. Methacryloxysilanes such as γ-methacryloxypropyltrimethoxysilane and the like may also be included in the present invention.

In one preferred process according to the present invention, the LCP polyester resin is mixed with an epoxysilane carried by a solvent such as ethanol, methanol, acetone, or the like. The non-thermotropic polymer is separately coated with another silane which is also in a solvent carrier. The two mixtures are then combined into one and dried (or in some cases dried separately and later combined) to remove the solvent, typically at a temperature of about 50-120°C depending on the solvent; preferably, the drying begins at a low temperature, e.g. about 60°C, and the temperature is increased, e.g. to about 120°C, in the final stages of drying to drive off the last traces of solvent.

The dried mixture is then melt blended in a batch mixer, an extruder, or other conventional apparatus at a temperature sufficient to achieve a homogenous blend, e.g. about 280-300°C. The optimum blending temperature will depend upon the specific identity and proportions of the polymeric and silane ingredients. During melt blending the ingredients are mixed well; typically, in a batch process, a mixing speed of about 100 rpm is sufficient, although other speeds may be used. The time required to thoroughly blend the ingredients will be affected by the temperature and the mixing speed and efficiency of the apparatus used.

In another preferred embodiment of the process of the present invention, the polymers and silanes are mixed together in one batch, without using a solvent, and are then blended as described above.

In a third preferred process of this invention, a premixture containing epoxysilane, water and ethanol is prepared and acetic acid is added in drops until the pH of the premixture is between about 3 and about 4 as indicated by pH test strips, e.g. those sold under the brand name Mikro Hydrion™ (manufactured by Micro Essential Laboratory in Brooklyn, New York). The amount of epoxysilane is calculated to be about 1-5% of the total weight of the final polymer blend. About 1-5% of the premixture weight is water and about 10-20% is ethanol, or another suitable solvent carrier. This premixture solution is allowed to sit for at least 5 minutes, and may remain for several hours or overnight, if desired.

The premixture solution is then mixed with the LCP and with the non-thermotropic polymer. To eliminate the carrier solvent, the mixture is then dried (e.g. in a convection oven under air or nitrogen atmosphere) at an appropriate temperature, e.g. at about 60°C, to remove water and ethanol. When the mixture appears to be dry it is transferred to a vacuum oven maintained at about 120°C and dried under vacuum for about 20 minutes to complete the drying process. The dry ingredients are then melt blended as described above. In this process, the polymers together may be combined with the premixture, or each polymer separately may be blended with a proportional amount of premixture to form two separate mixtures which are combined prior to melt blending.

Once an LCP blend of this invention has been made according to one of the processes described herein, or by an equivalent process, the LCP blend may be formed into pellets or divided into small particles. For instance, if a batch process was used to make the blend, it may be ground into powder; subsequently, this powder may be calendered using heated rollers, e.g. at about 300°C, to make a film. Alternatively, if a continuous extrusion process was used to make melt blends, then blend resins or pellets may be prepared by chopping extruded strands. Subsequently, the LCP blend resins are converted into film, sheet, or fiber by extrusion or spinning, or to molded articles by injection molding. Thus, the blends herein described may be used to make molded articles, fibers, film, sheets, and other articles. The properties of these articles will depend upon the exact composition of the LCP blend.

Although VECTRA® A resin has been used to illustrate the invention, virtually any wholly aromatic LCP polyester may be used in the practice of the present invention. Other examples of suitable LCP polyesters include: VECTRA® E resin (repeating units derived from p-hydroxybenzoic acid (60 mole %), 2,6-hydroxynaphthoic acid (4%), terephthalic acid (18%), and biphenol (18%)); VECTRA® C resin (repeating units derived from p-hydroxybenzoic acid (80 mole %), 2,6-hydroxynaphthoic acid (20%)); a poly[oxybenzoate-p-phenylene isophthalate] copolymer; and the like.

The blends of the present invention are well-suited for producing molded articles, e.g. injection molded articles, in which the surface blistering that is often seen on molded LCP articles is significantly reduced or eliminated. These blends may be molded by processes known in the art.

The blends of this invention are relatively inexpensive and are very readily processed, whether by spinning, extrusion, calendering, molding or other processes. Because these blends are able to be formed into very small, finely detailed components, they are useful in electronic components (e.g., in cameras, video and/or audio devices, and the like) and other applications where it is advantageous to produce miniaturized components.

The following Examples are provided to further illustrate particular embodiments of the present invention; however, the invention is not to be construed as limited to the embodiments illustrated.

### EXAMPLE I

PET (Clear Industrial resin made by Hoechst Celanese Corp., IV = 0.95 dl/g) and VECTRA® A resin were dried in a vacuum oven overnight at 125°C. Separate 10 wt % solutions in acetone of 3-aminopropyltrimethoxysilane and 2-(3,4-epoxycyclohexyl)ethyltrimethoxysilane were prepared.

Separately, each polymer was mixed with each silane solution in a fume hood at about 40°C to evaporate acetone until no excess liquid was observed, forming four dry polymer-silane premixtures. Each premixture contained 1.5% silane compound by weight.

Five 70-gram mixtures were made. The first was a control blend of the two polymers without any silane compound; the last four were made by blending the premixtures described above. Each mixture was melt blended in a Haake System 90 Melt Mixer at 300°C and 100 rpm for 10 minutes. The mixtures were:
1. 80% LCP + 20% PET
2. 80% LCP-epoxysilane + 20% PET-aminosilane
3. 80% LCP-aminosilane + 20% PET-epoxysilane
4. 80% LCP-aminosilane + 20% PET-aminosilane
5. 80% LCP-epoxysilane + 20% PET-epoxysilane.
Table I shows the ingredients contained in each of the five blends (in grams):

**Table I**

| Formula: | 1 | 2 | 3 | 4 | 5 |
|---|---|---|---|---|---|
| VECTRA® A910 LCP | 56.00 | 55.16 | 55.16 | 55.16 | 55.16 |
| PET | 14.00 | 13.79 | 13.79 | 13.79 | 13.79 |
| Epoxysilane | 0.00 | 0.84 | 0.21 | 0.00 | 1.05 |
| Aminosilane | 0.00 | 0.21 | 0.84 | 1.05 | 0.00 |

Each blend was removed from the mixer and ground into powder. Subsequently, the blends were calendered into films at a roll temperature of 310°C, a roll pressure of 1000 psig, and a roll speed of 0.5 m/min. The mechanical properties of these films were determined at 21°C and 50% relative humidity, according to ASTM procedure D882, using a floor model Instron with a 2-inch gauge length, 10% strain rate. The films were approximately 3 mils thick; five samples of each were tested. Results of these tests are presented in Table II; data on neat VECTRA® A910 film is included for comparison.

**Table II**

| Film Composition | Tensile Strength(Kpsi) | Tensile Modulus(Mpsi) | Elongation (%) |
|---|---|---|---|
| VECTRA® A910 | 23.6 | 0.70 | 7.1 |
| Control (blend 1) | 11.0 | 0.36 | 6.2 |
| Blend 2 | 16.3 | 0.48 | 16.6 |
| Blend 3 | 10.0 | 0.67 | 2.4 |
| Blend 4 | 10.8 | 0.65 | 2.4 |
| Blend 5 | 14.8 | 0.44 | 7.2 |

As Table II indicates, the blend made from LCP-epoxysilane and PET-aminosilane (blend 2) resulted in films that had the highest elongation of any film tested. Of the five blends, those in which LCP-aminosilane were used (blends 3 and 4) produced films that had the highest moduli (almost as high as neat LCP) and the lowest elongation and tensile strength.

The morphology of these blends were characterized using SEM (Scanning Electron Microscopy) and Hot Stage Microscopy. For SEM examination, the films were fractured in air along the draw direction to reveal the internal morphology. The SEM showed that the films of silane-containing blends tended to be more fibrillar and have less phase separation than the non-silane-containing LCP/PET films. Films of blend 2 (and to a lesser degree of blend 5) had a very fibrillar (LCP-like) morphology with no obvious dispersed phases, whereas the non-silane-containing LCP/PET films exhibited irregularly shaped PET domains with a broad size range and poor adhesion at the PET-LCP interfaces.

Films and resins of blend 2 and control blend 1 were examined by hot stage and standard light microscopy at room and elevated temperatures. Resin chips were prepared for hot stage analysis by thin sectioning using glass knife microtomy. The sections were then placed between quartz slides and heated on a Leitz hot stage to 350°C at 20°C/min. The samples were examined using crossed polars and a 20X objective lens and recorded on videotape; micrographs were taken from the videotape at selected temperatures at 200X magnification.

The hot stage microscopy results indicated that the control blend samples contained two indistinct phases at room temperature but clearly separated into nematic and isotropic phases at temperatures above 300°C. The blend recrystallized below 200°C, resulting in a two phase quenched structure having coarse PET spherulites distributed in an LCP matrix. The silane-containing blend appeared to have a much finer dispersion of PET particles with no obvious crystal to isotropic transition. It also began to flow at 270°C, as compared to 200°C for the control blend, and solidified on cooling below 285°C, resulting in a fine dispersion of PET in an LCP matrix.

Film samples were imbedded, cross-sectioned and mounted in glass slides in preparation for standard light microscopy. They were examined using polarized light and bright field optical microscopy, and micrographs were taken at 250X magnification in bright field. The results clearly indicated that by adding epoxy silane and amino silane compatibilizers to the blends, a more finely dispersed PET morphology results as compared to films without compatibilizers.

### EXAMPLE II

A blend comprising 79.5 wt % VECTRA® A resin, 19.5% PET resin, and 1% 2-(3,4-epoxycyclohexyl)ethyltrimethoxysilane was made in a Haake mixer under the conditions described in Ex. I. The epoxysilane was added directly to a mixture of the polymer resins without a solvent carrier. The blend was made into a film as described in Ex. I. The mechanical properties and blend morphology of this film were measured as in Ex. I and found to be comparable to those of the films made of blend 2 in Ex. I. The tensile strength, modulus and elongation were 17.2 Kpsi, 0.49 Mpsi and 16.2%, respectively.

### EXAMPLE III

A blend composition comprising 74.5 wt % VECTRA® A LCP resin, 24.5% PPS resin (FORTRON™ W-300 resin, mfd. by Hoechst Celanese Corp.), and 1% 2-(3,4-epoxycyclohexyl) ethyltrimethoxysilane was made in a Haake mixer under the conditions described in Ex. I. The epoxysilane was added directly to the polymers without a solvent carrier. The blend was made into a film as described in Ex. I. A control film comprising 75% LCP and 25% PPS was also made in this manner. A blend comprising 74% VECTRA® A LCP resin, 24% PPS, 1% 2-(3,4-epoxycyclohexyl)ethyltrimethoxy silane, and 1% mercaptosilane (Union Carbide silane A-189 γ-mercaptopropyltrimethoxysilane) was made by the same procedure, the silanes being added to the mixed polymer resins directly (without solvent carrier) immediately prior to melt mixing. These three blends were formed into films, and their properties were measured, according to the procedure of Ex. I. Table III presents the measured mechanical properties.

**Table III**

| Film Composition | Tensile Strength(Kpsi) | Tensile Modulus(Mpsi) | Elongation (%) |
|---|---|---|---|
| Control blend | 8.4 | 0.50 | 6.0 |
| LCP/PPS/ep* | 12.5 | 0.53 | 7.3 |
| LCP/PPS/ep/m* | 15.4 | 0.55 | 9.5 |

| | | | |
|---|---|---|---|
| *ep indicates epoxysilane; m indicates mercaptosilane. | | | |

Morphology studies indicated that the silane-containing blends both had superior phase dispersion and appeared to be more fibrillar than the control blend.

### EXAMPLE IV

A blend of 74 wt% VECTRA® A LCP resin, 24% PEN, and 2% 2-(3,4-epoxycyclohexyl) ethyltrimethoxysilane (without solvent) were blended together and formed into films according to the procedure of Ex. II. A control blend containing 75% LCP + 25% PEN was also made and formed into film. The mechanical properties of films made from these two blends were measured and the results are shown in Table V.

**Table V**

| Film Composition | Tensile Strength(Kpsi) | Tensile Modulus(Mpsi) | Elongation (%) |
|---|---|---|---|
| Control blend | 6.1 | 0.45 | 1.6 |
| Silane blend | 17.7 | 0.53 | 16.7 |

The silane-compatibilized blend appeared to have a morphology in which there was good phase dispersion, whereas the control blend exhibited gross phase separation.

### EXAMPLE V

A blend composition containing the LCP, PET, aminosilane and epoxysilane of Ex. I was made. The procedure for preparing premixtures was as for blend 2 of Ex. I except that the silanes were added directly to the polymers without solvent carrier; to get a uniform silane coating, the polymer-silane premixtures were tumbled for five hours. The LCP-epoxysilane and PET-aminosilane premixtures were then combined in an 80/20 ratio and heated in an extruder to form a melt which was then thoroughly mixed at about 300°C in a conventional twin screw melt extrusion apparatus and then extruded into the form of a strand. The extruded strand was cooled in a water bath and then chopped into pellets. Pellets of a LCP/PET control blend without silane was made in the same way.

The pellets were dried overnight at 125°C in a vacuum oven or circulating air oven and molded into shaped articles (tensile and flex bars) by heating to the melt temperature (280-300°C) and injection molding at about 10,000 psi and about 95°C using a 40-second cycle time. Neat LCP was molded into similar articles for comparison. The mechanical properties of the articles were measured and are shown in Table VI.

**Table VI**

| Film Composition | Tensile Strength(Kpsi) | Tensile Modulus(Mpsi) | Elongation (%) |
|---|---|---|---|
| Neat LCP | 27.5 | 1.36 | 3.5 |
| Control blend | 19.5 | 1.11 | 3.0 |
| Silane blend | 23.1 | 1.25 | 4.9 |

Morphology studies showed that the silane blend and control blend had structures similar to the silane blends and control blend of Ex. I, respectively. Also observed was a reduction or elimination of surface blistering: of about four dozen molded bars studied, most bars containing the control blend had significant surface blisters normally seen in molded LCP parts, whereas none of the silane blend-containing bars had blisters.

### EXAMPLE VI

VECTRA® A LCP resin and PPO resin (IV = 0.4 dl/g, supplied by GE Plastics in powder form) were dried overnight at 125°C in a vacuum oven. These polymers were blended together to form the three formulations shown in Table VII, two of which included 3-aminopropyltrimethoxy silane ("AS") and 2-(3,4-epoxycyclohexyl)ethyltrimethoxy silane ("ES"). The silanes, without solvent, were tumbled with the polymers in a Lightning® mixer. The mixed ingredients were then extruded from a Haake twin screw lab scale extruder at 60 rpm and 300°C barrel temperature. The extrudate was cooled in a water bath, pelletized, and dried overnight in a vacuum oven at 125°C. The pellets were then molded into 4-inch tensile bars and 2-inch disks. Mechanical properties were measured and are reported in Table VIII. SEM photographs were obtained; these showed that the silane-containing blends are more finely dispersed than the non-silane blends.

**Table VII**

| Blend # | LCP(g) | PPO(g) | ES(g) | AS(g) |
|---|---|---|---|---|
| 1 | 136 | 1224 | 0 | 0 |
| 2 | 136 | 1224 | 6.8 | 13.6 |
| 3 | 136 | 1224 | 1.4 | 13.6 |

**Table VIII**

| Blend | Tensile Strength @ break (Kpsi) | Elongation @ break(%) | Dropped Dart Impact Energy(in-lb) | | |
|---|---|---|---|---|---|
| | | | Crack | Peak | Total |
| 1 | 4.54 | 4.2 | 3.73 | 11.9 | 27.5 |
| 2 | 10.15 | 5.8 | 5 | 20.3 | 38.4 |
| 3 | 7.28 | 9.8 | 7.97 | 17 | 29.6 |

Many variations of the process and of the polymer blends disclosed herein will be apparent to those skilled in the art. The present invention is not limited to the embodiments described and illustrated herein, but encompasses all the subject matter within the appended claims.

## Claims

1. A polymer blend comprising a wholly aromatic thermotropic LCP polyester, a non-thermotropic polymer, and an organofunctional silane compound.

2. A polymer blend according to claim 1 comprising from about 0.5% to about 5% by weight of said silane, from about 5% to about 95% by weight of said polyester, and from about 95% to about 5% by weight of said non-thermotropic polymer.

3. A polymer blend according to claim 2 wherein said non-thermotropic polymer is PPO, PCT, PPS, PET or PEN.

4. A polymer blend according to claim 2 wherein said LCP polyester comprises repeating units derived from p-hydroxybenzoic acid and repeating units derived from 2,6-hydroxynaphthoic acid.

5. A polymer blend according to claim 2 wherein said silane is selected from the group consisting of aminosilane, vinylsilane, mercaptosilane, methacryloxysilane, and epoxysilane.

6. A polymer blend according to claim 1 further comprising a second organofunctional silane.

7. A polymer blend according to claim 6 comprising from about 0.1% to about 5% by weight of said epoxysilane, from about 5% to about 95% by weight of said LCP polyester, from about 95% to about 5% by weight of said non-thermotropic polymer, and from about 0.1% to about 5% by weight of said second organofunctional silane.

8. A polymer blend according to claim 6 wherein said second organofunctional silane is selected from the group consisting of epoxysilane, aminosilane, vinylsilane, mercaptosilane, and methacryloxysilane.

9. A process for making a blend according to claim 1 comprising melt blending a mixture containing said LCP polyester, said non-thermotropic polymer and said organofunctional silane.

10. A process according to claim 9 further comprising, prior to said melt blending step, the steps of:
mixing said silane with an organic solvent to form a solution;
mixing said solution with said polymers to form said mixture; and,
drying said mixture to remove said solvent.

11. A process according to claim 9 wherein said silane comprises an epoxysilane, an aminosilane, a methacryloxysilane, a vinylsilane or a mercaptosilane.

12. A process according to claim 9 further comprising, prior to said melt blending step, the steps of:
mixing said silane with an organic solvent to form a first solution;
mixing said first solution with said polyester to form a first premixture;
drying said first premixture to remove said solvent;
mixing a second organofunctional silane with an organic solvent to form a second solution;
mixing said second solution with said non-thermotropic polymer to form a second premixture;
drying said second premixture to remove said solvent; and,
mixing together said dried premixtures to form said mixture.

13. A process for forming surface blister free molded LCP articles comprising injection molding a blend according to claim 1.

14. An article comprising a polymer blend according to claim 1.

15. An article according to claim 14 in the form of a film, sheet, fiber, or molded article.

16. A polymer blend comprising from about 5% to about 95% by weight of an LCP polyester, from about 0.5% to about 5% by weight of an epoxysilane, and from about 95% to about 5% by weight of a non-thermotropic polymer selected from the group consisting of PPO, PPS, PET, PCT and PEN.

17. A polymer blend according to claim 16 further comprising from about 0.5% to about 5% by weight of a second organofunctional silane selected from the group consisting of aminosilanes, methacryloxysilanes, vinylsilanes, and mercaptosilanes.
